Europäisches Patentamt

European Patent Office

Office européen des brevets

(11) Publication number: **0 184 724**
**B1**

## (12) EUROPEAN PATENT SPECIFICATION

(45) Date of publication of patent specification: **11.07.90**

(21) Application number: **85115107.6**

(22) Date of filing: **28.11.85**

(51) Int. Cl.⁵: **H 02 K 5/15, H 02 K 5/173, H 02 K 9/06, H 02 K 7/10**

(54) **Electric motor, particularly for laundry washing machines.**

(30) Priority: **14.12.84 IT 4573084**

(43) Date of publication of application:
**18.06.86 Bulletin 86/25**

(45) Publication of the grant of the patent:
**11.07.90 Bulletin 90/28**

(84) Designated Contracting States:
**AT BE CH DE FR GB IT LI LU NL SE**

(56) References cited:
**AT-B- 165 259**
**CH-A- 269 308**
**CH-A- 282 197**
**DE-A-1 763 148**
**DE-C- 563 560**
**DE-U-7 336 007**
**FR-A- 735 804**
**FR-A-2 529 405**
**IT-A- 869 350**
**US-A-2 057 637**
**US-A-2 236 621**
**US-A-2 462 204**
**US-A-3 544 820**

(73) Proprietor: **SOLE S.p.A.**
**Via Giardini Cattaneo 3**
**I-33170 Pordenone (IT)**

(72) Inventor: **Rossi, Luigi**
**Via S. Murialdo 11/4**
**I-31046 Oderzo Treviso (IT)**

(74) Representative: **Patentanwälte Grünecker, Kinkeldey, Stockmair & Partner**
**Maximilianstrasse 58**
**D-8000 München 22 (DE)**

Courier Press, Leamington Spa, England.

## Description

The present invention relates to an electric induction motor adapted to be employed in particular for rotating the drum of a laundry washing machine with the intermediate of a belt transmission.

Electric motors employed for this purpose usually have a stator formed of a stack of laminations of a ferromagnetic material and provided with a copper wire winding, and a rotor, likewise made of a ferromagnetic material, fixedly secured to a shaft mounted by means of suitable bearings for rotation in a pair of electrically insulated end plates secured to a housing enclosing the stator. The mounting of the end plates, and thus in fact the final assembly of the motor is accomplished by means of tension bolts, by welting the rim of the housing over the peripheral edges of the end plates, or by welding along the outer periphery of the stator. A motor of this type requires adequate cooling for dissipating the heat developed in operation, to which purpose it is provided with at least one blower wheel mounted on the rotor shaft. Motors of conventional type are usually provided with two such blower wheels disposed one at each end of the motor.

IT-A-869 350 describes a motor of the above kind, which is already relatively simple in construction but still is not satisfying for a mass product, because its assembly is difficult. Especially the bolts and screws used for fastening the supports between the stator and the rotor cannot be handled in an automatic assembly line but have to be fastened by hand.

The electric motor according to CH-A-269 308 in its figure 1 shows an advantageous concept for a support between the stator and the rotor. This support grips into a corner part of the stator for centring and clamping the rotor to the stator. This publication, however, does not give any teaching of how all parts are held together, especially how the bearings and any other parts as blowers or the hub for a pulley may be secured.

DE-A-1 763 148 shows an electric machine with a cylindrical housing in which the stator is pressed fitted or otherwise secured. The two supports have circumferential rims in which the housing engages. The blower wheels are mounted on the distal ends of the shaft, one of the blower wheels shows an integral hub for a pulley. For clamping together all mentioned parts the shaft has screwed ends and nuts mounted on them. Besides the necessity of a separate cylindrical housing, this construction leads to high axial forces on the bearings executed by the nuts fastened on the shaft.

The invention as claimed is intended to provide an electric motor which is simple in construction and easy to assemble.

The advantages offered by the invention are mainly the small number of parts to be used and the simple assembly without the need of fastening any bolts or nuts.

The advantages and characteristics of the invention will become more clearly evident from the following description, given by way of example with reference to the accompanying drawings, wherein:

fig. 1 shows a partially sectioned elevational view of a motor according to the invention, with a particular detail shown on an enlarged scale, and

fig. 2 shows a partially sectioned elevational view of a modified embodiment of the motor of fig. 1, with a specific detail shown on an enlarged scale.

As shown in the drawings, the electric motor according to the invention comprises a hollow stator 11 formed of a stack 12 of laminations of a ferromagnetic material and provided with a winding 13 of suitably insulated copper wire, and a rotor 14 likewise of a ferromagnetic material and mounted for rotation in the hollow interior of stator 11.

Rotor 14 is keyed onto a shaft 16 provided with a fluted surface portion 17 for this purpose. Mounted on shaft 16 at both sides of rotor stack 14 are bearings 18 retained in disk-shaped bearing supports 20, each of which is formed with a circumferentially extending arrangement of lightening and ventilation holes 22. Each bearing-support with its respective bearing forms a unitary structural element which may be preassembled to facilitate final assembly of the motor.

The outer peripheral rim portion 23 of bearing supports 20 is conveniently formed with a stepped profile, permitting the bearing support to be clampingly retained in a press fit by the corresponding inner rim portion 24 of the stator lamination stack 12. For accommodating this press fit mounting, the rotor has its outer peripheral edge 21 likewise formed as a stepped profile.

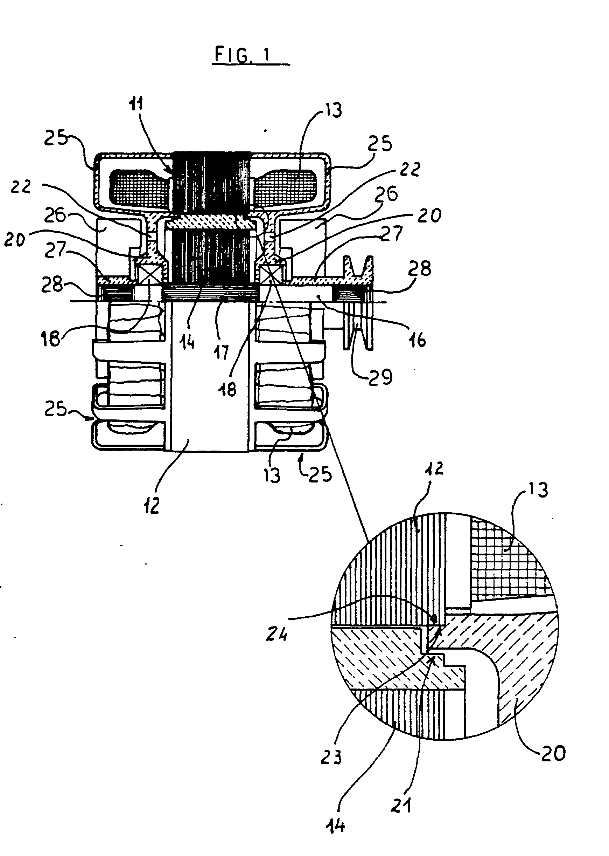

In a preferred embodiment of the motor according to the invention as shown in fig. 1, each support 20 is integrally formed with a hood 25 for the protection of the stator winding 13.

Mounted on shaft 16 axially outwards of each bearing-support subassembly are two blower wheels 26 each having a hub sleeve 27 keyed onto a respective fluted portion 28 of the shaft in a press fit.

The inner end of each hub sleeve 27 is in abutment with the inner race of the respective bearing 18, so as to retain it in position on shaft 16.

As shown in fig. 1, a pulley 29 for engagement with a transmission belt connecting it to a pulley on the shaft of the drum of the laundry washing machine (not shown) is integrally connected as by compression welding to the hub sleeve 27 of the respective blower wheel 26.

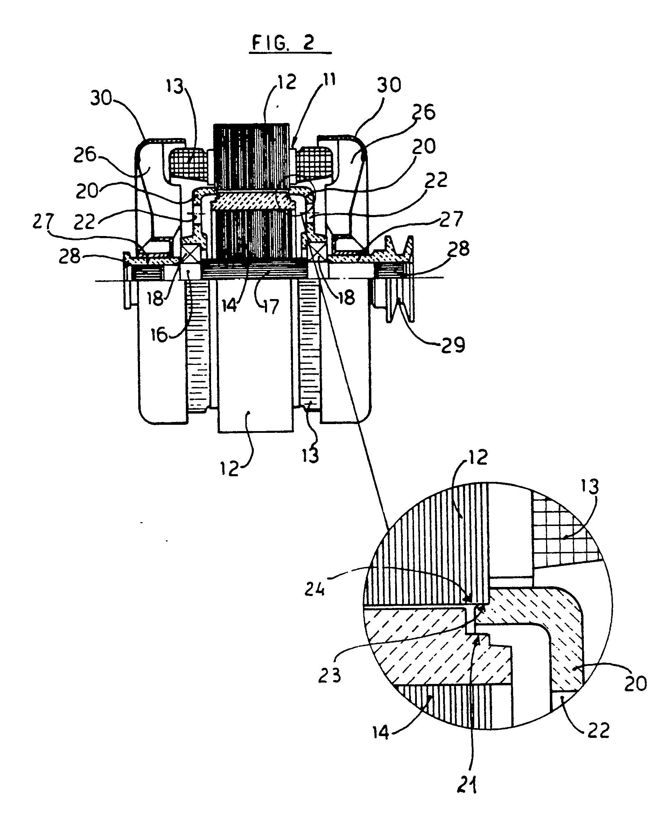

In an alternative embodiment of the invention shown in fig. 2, each blower wheel 26 is integrally formed with a hood or shroud 30 for the protection of the stator winding 13. The hoods 30 thus perform the same function as the hoods or shrouds 25 shown in fig. 1. The described motor has been found to be perfectly suitable for a completely automatized assembly operation.

In a first step of such assembly operation, the stator is aligned in an assembly station. Subsequently one of the bearing supports with the respective bearing mounted therein is applied to the stator so as to seat on the inner peripheral edge thereof. This is followed by the insertion of the shaft with the rotor already mounted thereon, and by slipping the second support with its bearing onto the shaft so as to seat on the respective inner rim portion of the stator.

Subsequently the hub sleeves with the respective blower wheels mounted thereon and with the pulley mounted on one of them are slipped onto the end portions of the shaft, whereupon the assembly operation is finished by the exertion of the axial compressive force on the various structural components.

## Claims

1. An electric motor, particularly for laundry washing machines, comprising a stator (11) formed of a stack (12) of laminations of a ferromagnetic material and provided with a copper wire winding (13), and a rotor (14) of a ferromagnetic material, mounted for rotation within said stator (11) and keyed to a shaft (16) carrying two cooling blower wheels (26) and a pulley (29) for the engagement of a belt for connecting it to the drum of the laundry washing machine, said shaft (16) being mounted for rotation in bearings (18) characterized in that said bearings (18) are fixedly secured to respective supports (20), these supports (20) are clampingly retained by inner edge portions (24) of said stator (11) at opposite sides thereof, and in that said bearings (18) are retained in position on said shaft (16) by a hub sleeve (27) of one blower wheel (26) and by a hub sleeve (27) of said pulley (29), respectively, said pulley hub sleeve (27) carrying the second blower wheel (26), both said hub sleeves (27) being keyed and press fitted onto said shaft (16) to abut the inner race of the respective bearing (18).

2. Electric motor according to claim 1, characterized in that the outer peripheral rim (23) of each bearing support (20) and the corresponding outer rim (21) of said rotor (14) are formed with stepped surfaces.

3. Electric motor according to claim 1, characterized in that said bearing supports (20) are formed with lightening and ventilating bores (22), and that a protecting hood for the stator winding (13) is integrally formed with each bearing support (20).

4. Electric motor according to claim 1, characterized in that a protection hood (30) for the stator winding (13) is integrally formed with each blower wheel (26).

5. Electric motor according to claim 1, characterized in that each blower wheel (26) is formed integrally with its respective hub sleeve (27), and that said pulley (29) is likewise integrally formed with the respective hub sleeve (27).

6. Electric motor according to claim 1, characterized in that for press fitting the hub sleeves (27) on the shaft (16) there are provided fluted surfaces (17, 28) between the hub sleeves (27) and the shaft (16).

## Patentansprüche

1. Elektromotor, insbesondere für waschmaschinen, enthaltend einen stator (11) aus einem stapel (12) aus Blechen eines ferromagnetischen Materials, der mit einer Kupferdrahtwicklung (13) versehen ist, und einen Rotor (14) aus einem ferromagnetischen Material, der drehbar in dem stator (11) gelagert und auf einer welle (16) verkeilt ist, die zwei Kühlgebläseräder (26) und eine Riemenscheibe (29) zur Führung eines Riemens trägt, um sie mit der Trommel der waschmaschine zu verbinden, wobei die welle (16) in Lagern (18) drehbar gelagert ist, dadurch gekennzeichnet, daß die Lager (18) an entsprechenden Trägern (20) fest angebracht sind, diese Träger (20) durch innere Randabschnitte (24) des stators (11) an entgegengesetzten seiten desselben klemmend gehalten sind, und daß die Lager (18) auf der welle (16) durch eine Nabenhülse (27) eines Gebläserades (26) bzw. durch eine Nabenhülse (27) der Riemenscheibe (29) in Position gehalten sind, wobei die Riemenscheibennabenhülse (27) das zweite Gebläserad (26) trägt, beide Nabenhülsen (27) auf der welle (16) verkeilt und mit Preßpassung so befestigt sind, daß sie an die innere Lagerschale des jeweiligen Lagers (18) anstoßen.

2. Elektromotor nach Anspruch 1, dadurch gekennzeichnet, daß der äußere Umfangsrand (23) eines jeden Lagerträgers (20) und der entsprechende äußere Rand (21) des Rotors (14) mit abgestuften Flächen versehen sind.

3. Elektromotor nach Anspruch 1, dadurch gekennzeichnet, daß die Lagerträger (20) mit Bohrungen (22) zur Gewichtsverminderung und Ventilation versehen sind und daß eine schutzhaube für die statorwicklung (13) integral mit jedem Lagerträger (20) ausgebildet ist.

4. Elektromotor nach Anspruch 1, dadurch gekennzeichnet, daß eine schutzhaube (30) für die statorwicklung (13) integral mit jedem Gebläserad (26) ausgebildet ist.

5. Elektromotor nach Anspruch 1, dadurch gekennzeichnet, daß jedes Gebläserad (26) integral mit seiner zugehörigen Nabenhülse (27) ausgebildet ist und daß die Riemenscheibe (29) ebenfalls integral mit der zugehörigen Nabenhülse (27) ausgebildet ist.

6. Elektromotor nach Anspruch 1, dadurch gekennzeichnet, daß zum Preßpassen der Nabenhülse (27) auf die Nabe (16) geriefte Oberflächen (17, 28) zwischen den Nabenhülsen (27) und der welle (16) vorgesehen sind.

## Revendications

1. Moteur électrique, notamment pour des machines à laver le linge, comprenant un stator (11) formé par un empilage (12) de tôles en un matériau ferromagnétique et équipé d'un enroulement de fil de cuivre (13), et un rotor (14) en un matériau ferromagnétique, monté pour tourner à l'intérieur du stator (11) et claveté sur un arbre (16) portant deux roues de ventilateur de refroidissement (26) et une poulie (29) pour coopérer avec une courroie pour la raccorder au tambour de la machine à laver le linge, cet arbre (16) étant monté pour tourner dans des paliers (18), caractérisé en ce que ces paliers (18) sont solidarisés de supports respectifs (20), que ces supports (20) sont retenus par les portions de bord intérieur (24) du stator (11) de part et d'autre de celui-ci et que ces paliers (18) sont retenus en position sur l'arbre (16) respectivement par un moyeu (27) d'une roue de ventilateur (26) et par un moyeu (27) de la poulie (29), le moyeu de poulie (27) portant la deuxième roue de ventilateur (26), les deux moyeux (27) étant clavetés et montés à force sur l'arbre (16) pour venir buter sur la bague de roulement intérieure du palier associé (18).

2. Moteur électrique selon la revendication 1, caractérisé en ce que le bord périphérique extérieur (23) de chaque support de palier (20) et le bord extérieur correspondant (21) du rotor (14) comporte des surfaces présentant des décrochements.

3. Moteur électrique selon la revendication 1, caractérisé en ce que les supports de palier (20) comportent des trous d'allègement et de ventilation (22) et en ce qu'un capot de protection de l'enroulement de stator (13) est formé d'une seule pièce avec chaque support de palier (20).

4. Moteur électrique selon la revendication 1, caractérisé en ce qu'un capot de protection (30) pour l'enroulement de stator (13) est formé d'un seul tenant avec chaque roue de ventilateur (26).

5. Moteur électrique selon la revendication 1, caractérisé en ce que chaque roue de ventilateur (26) est formée d'un seul tenant avec son moyeu respectif (27) et que la poulie (29) est de même formée d'un seul tenant avec son moyeu respectif (27).

6. Moteur électrique selon la revendication 1, caractérisé en ce que, pour le montage à force des moyeux (27) sur l'arbre (16), il est prévu des surfaces cannelées (17, 28) entre les moyeux (27) et l'arbre (16).

FIG. 1

FIG. 2